# EUROPÄISCHE PATENTANMELDUNG

(11) **EP 3 617 566 A1**
(43) Veröffentlichungstag der Anmeldung: **04.03.2020**
(21) Anmeldenummer: 18465563.7
(22) Anmeldetag: 27.08.2018
(51) Int. Cl.: F16K 1/22, F02D 9/10, F02D 9/04, F02D 9/06

(54) **VENTIL ZUR STEUERUNG VON ABGAS ODER FRISCHLUFT IN EINER ANTRIEBSEINHEIT EINES KRAFTFAHRZEUGES ODER GENERATORS**

(71) Anmelder: Continental Automotive GmbH, 30165 Hannover (DE)
(72) Erfinder: Albert, Eusebio-Marius, 300737 Timisoara (RO); Gavrila, Razvan-George, 300229 Timisoara (RO)

(57) **Zusammenfassung**

Ein Ventil (7) zur Steuerung von Abgas oder Frischluft in einer Antriebseinheit hat eine am freien Ende einer Antriebswelle (14) für einen Ventilkörper (15) angeordnete axiale Abstützung (20) . Die axiale Abstützung (20) hat einen zwischen einem in einem Ventilgehäuse (11) eingepressten Deckel (21) und einer Lagerung (18) angeordneten Sicherungsring (23). Der Deckel (21) dichtet das Ventilgehäuse (11) ab und hat eine ringförmige Sicke (26).

## Beschreibung

Die Erfindung betrifft ein Ventil zur Steuerung von Abgas oder Frischluft in einer Antriebseinheit eines Kraftfahrzeuges oder Generators mit einem einen Kanal aufweisenden Ventilgehäuse, mit einem auf einer Antriebswelle befestigten Ventilkörper zum Freigeben oder Verschließen eines Strömungsquerschnitts des Kanals, mit einem Antrieb zur Verschwenkung der Antriebswelle, mit einer Lagerung der Antriebswelle in dem Ventilgehäuse und mit einer axialen Abstützung der Antriebswelle in dem Ventilgehäuse.

Solche Ventile werden insbesondere in Drosselklappenstutzen oder Abgasklappen heutiger Kraftfahrzeuge eingesetzt und sind aus der Praxis bekannt. Der Ventilkörper ist auf der Antriebswelle verschraubt und wird mit dieser verschwenkt. Die Antriebswelle ist aus dem Ventilgehäuse bis in ein weiteres Gehäuse des meist elektrisch gestalteten Antriebs geführt. Das dem Antrieb abgewandte Ende der Antriebswelle hat die Lagerung in dem Ventilgehäuse. Die axiale Abstützung stellt eine exakte Positionierung der Drosselklappe innerhalb des Strömungskanals und gleichzeitig die Positionierung der Antriebswelle gegenüber dem Antrieb sicher.

Bei dem aus der Praxis bekannten Ventil ist ein Sicherungsring zwischen der Lagerung und einem Absatz im Ventilgehäuse in einer Nut der Antriebswelle angeordnet. Die Nut führt jedoch zu einer Verringerung des Querschnitts der Antriebswelle zwischen Lagerung und Ventilkörper. In der Folge benötigt die Antriebswelle für eine vorgesehene Stabilität einen besonders großen Durchmesser. Ein großer Durchmesser der Antriebswelle führt zu hohen Fertigungskosten des Ventils und zu einer hohen Trägheit bei der Verstellung des Ventils.

Der Erfindung liegt das Problem zugrunde, ein Ventil der eingangs genannten Art so weiter zu bilden, dass es eine hohe Stabilität aufweist und große Durchmesser der Antriebswelle vermeidet.

Dieses Problem wird erfindungsgemäß dadurch gelöst, dass die axiale Abstützung von der Lagerung aus gesehen am freien Ende der Antriebswelle angeordnet ist.

Durch diese Gestaltung ist die axiale Abstützung außerhalb des mechanisch belasteten Bereichs der Antriebswelle angeordnet. Die Antriebswelle wird hierdurch von der axialen Abstützung nicht geschwächt und hat damit auch bei einem kleinen Durchmesser eine hohe Stabilität. Damit kann die Antriebswelle einen besonders kleinen Durchmesser aufweisen. Durch den kleinen Durchmesser hat die Antriebswelle eine besonders geringe Trägheit. Hierdurch gestaltet sich die Fertigung der Antriebswelle zudem besonders einfach, weil diese mit konstantem Durchmesser über die gesamte Länge bis zu der Abstützung hergestellt sein kann. Das Ventil lässt zudem besonders kostengünstig herstellen.

Die Lagerung der Antriebswelle ist lässt sich gemäß einer anderen vorteilhaften Weiterbildung der Erfindung axial unverschiebbar in ihrer Lage gehalten, wenn die Lagerung zwischen der axialen Abstützung und einem Absatz des Ventilgehäuses angeordnet ist.

Die axiale Abstützung gestaltet sich gemäß einer anderen vorteilhaften Weiterbildung der Erfindung konstruktiv besonders einfach, wenn die axiale Abstützung einen Rand der Antriebswelle und eine mit dem Ventilgehäuse verbundene Stütze zur Abstützung des Randes hat.

Zur weiteren Vereinfachung des konstruktiven Aufbaus des Ventils trägt es gemäß einer anderen vorteilhaften Weiterbildung der Erfindung bei, wenn die Stütze einen das Ventilgehäuse über dem Ende der Antriebswelle abdichtenden Deckel aufweist. Da eine Abdichtung des Endes der Antriebswelle ohnehin notwendig ist, wird hierdurch die Anzahl der Bauteile des Ventils gering gehalten.

Das Ventil lässt sich gemäß einer anderen vorteilhaften Weiterbildung der Erfindung besonders kostengünstig fertigen, wenn der Deckel aus Blech gefertigt ist und in das Ventilgehäuse eingepresst ist.

Der Deckel weist gemäß einer anderen vorteilhaften Weiterbildung der Erfindung eine besonders hohe Stabilität auf, wenn der aus Blech gefertigte Deckel eine ringförmige Sicke als Stütze aufweist.

Die Stütze könnte das freie Ende der Antriebswelle unmittelbar abstützen. Die Abstützung gestaltet sich jedoch gemäß einer anderen vorteilhaften Weiterbildung der Erfindung über den Umfang der Antriebswelle besonders gleichmäßig, wenn der Rand der axialen Abstützung von der Antriebswelle hervorsteht.

Der hervorstehende Rand könnte beispielsweise als Absatz einstückig mit der Antriebswelle gefertigt sein. Dies führt zu einer besonders genauen Positionierung der Antriebswelle. Die Fertigung der Antriebswelle gestaltet sich hierdurch jedoch kostenintensiv. Zur besonders kostengünstigen Fertigung des Ventils trägt es gemäß einer anderen vorteilhaften Weiterbildung der Erfindung bei, wenn die Antriebswelle eine Nut und ein in der Nut eingesetzten, den Rand der axialen Stütze bildenden Sicherungsring hat. Solche Sicherungsringe sind beispielsweise als Wellensicherungsscheiben oder C-förmige Federringe bekannt und als Handelsware erhältlich.

Die Antriebswelle könnte eine Abflachung zur Abstützung des Ventilköpers haben. Diese Abflachung führt jedoch zu einer Schwächung des Querschnitts der Antriebswelle, so dass diese einen großen Durchmesser benötigt. Die Antriebswelle lässt sich gemäß einer anderen vorteilhaften Weiterbildung der Erfindung mit kleinem Durchmesser fertigen und hat dennoch eine hohe Stabilität, wenn die Antriebswelle einen Durchbruch hat und wenn der Ventilkörper scheibenförmig gestaltet ist und in dem Durchbruch befestigt ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch einen Teilbereich eines Kraftfahrzeuges mit einer Antriebsmaschine und einem Ventil,
- Fig.2: vergrößert das Ventil aus Figur 1 in einer perspektivischen Explosionsdarstellung,
- Fig.3: eine Schnittdarstellung durch einen Teilbereich des Ventils aus Figur 2 entlang der Linie III - III,
- Fig.4: stark vergrößert eine Einzelheit IV des Ventils aus Figur 3.

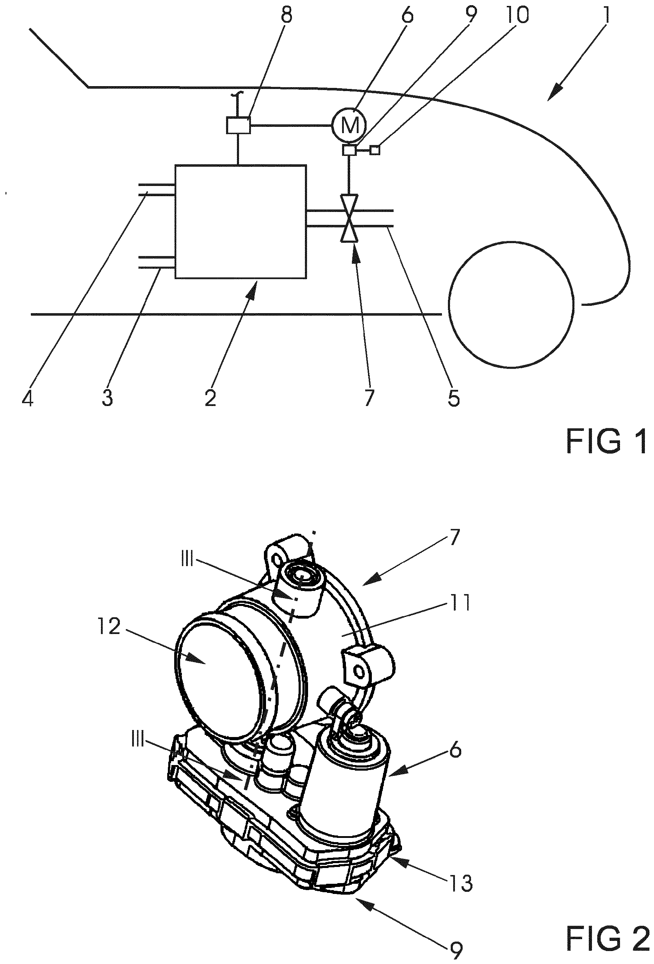

Figur 1 zeigt schematisch einen Teilbereich eines Kraftfahrzeuges 1 mit einer eine Antriebsmaschine 2 aufweisenden Antriebseinheit. Die Antriebsmaschine 2 kann das Kraftfahrzeug mechanisch antreiben oder einen nicht dargestellten Elektroantrieb mit elektrischen Strom versorgen. Die Antriebseinheit hat zwei Zuführkanäle 3, 4 für Brennstoff, beispielsweise gasförmigen Brennstoff, und für Frischluft und einen Abgasstrang 5. Bei der Antriebsmaschine 2 kann es sich beispielsweise um eine Brennstoffzelle oder um eine Brennkraftmaschine handeln. In dem Abgasstrang 5 ist ein von einem elektromotorischen Antrieb 6 ansteuerbares Ventil 7 angeordnet.

In einer nicht dargestellten Ausführungsform kann das Ventil 7 auch in dem Frischluft führenden oder Brennstoff führenden Zuführkanal 3, 4 angeordnet sein.

Von der Antriebsmaschine 2 erzeugter elektrischer Strom wird einer Steuereinrichtung 8 zugeführt. Die Steuereinrichtung 8 ist mit einem nicht dargestellten Bordnetz des Kraftfahrzeuges verbunden. Der elektromotorische Antrieb 6 des Ventils 7 wird über die Steuereinrichtung 8 mit elektrischem Strom versorgt. Zwischen dem Ventil 7 und dem elektromotorischen Antrieb 6 ist ein Getriebe 9 mit einem Positionssensor 10 angeordnet. Der Positionssensor 10 erfasst die Stellung und damit die Funktion des Ventils 7.

Figur 2 zeigt vergrößert das Ventil 7 aus Figur 1 in einer perspektivischen Darstellung. Das Ventil 7 hat ein Ventilgehäuse 11 mit einem Kanal 12. An dem Ventilgehäuse 11 ist ein Antriebsgehäuse 13 mit dem elektromotorischen Antrieb 6 befestigt. Das in Figur 1 schematisch dargestellte Getriebe 9 ist ebenfalls in dem Antriebsgehäuse 13 angeordnet.

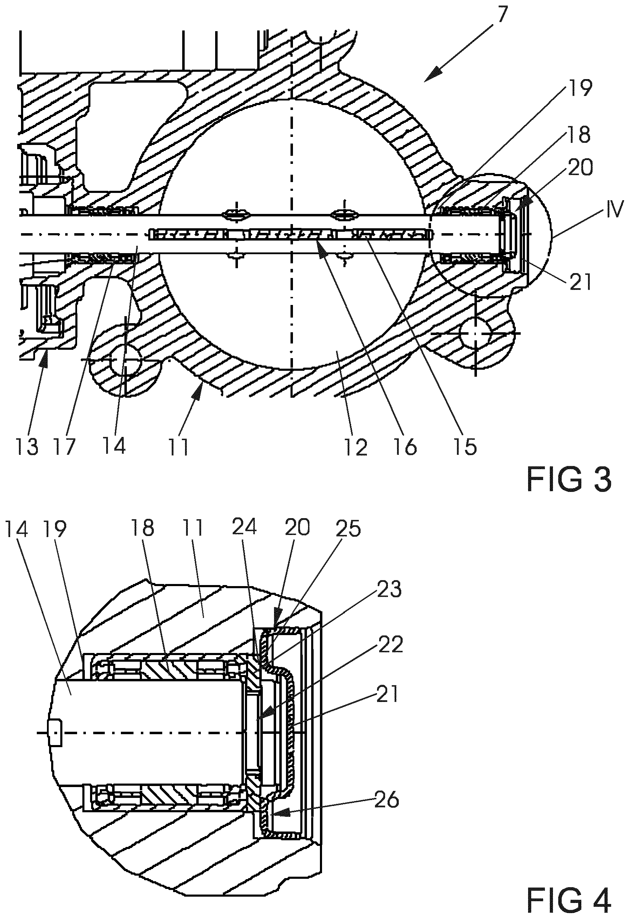

Figur 3 zeigt eine Schnittdarstellung durch das Ventilgehäuse 11 aus Figur 2 mit angrenzenden Bereichen des Antriebsgehäuses 13 entlang der Linie III - III. Das Ventil 7 hat eine von dem elektromotorischen Antrieb 6 verschwenkbare Antriebswelle 14 mit einem darauf angeordneten scheibenförmigen Ventilkörper 15. Der Ventilkörper 15 ist in einem Durchbruch 16 der Antriebswelle 14 befestigt. Durch eine Verschwenkung der Antriebswelle 14 wird damit der Strömungsquerschnitt des Kanals 12 freigegeben oder ganz oder teilweise verschlossen. Die Antriebswelle 14 hat zwei Lagerungen 17, 18. Eine der Lagerungen 18 ist nahe des freien Endes der Antriebswelle 14 zwischen einem Absatz 19 im Ventilgehäuse 11 und einer axialen Abstützung 20 angeordnet. Das Ventilgehäuse 11 ist im Bereich des freien Endes der Antriebswelle 14 von einem Deckel 21 verschlossen.

Figur 4 zeigt stark vergrößert die Einzelheit IV aus Figur 3 mit der nahe des freien Endes der Antriebswelle 14 angeordneten Lagerung 18. Die axiale Abstützung 20 hat einen in einer Nut 22 der Antriebswelle 14 angeordneten Sicherungsring 23 und eine an dem Deckel 21 angeordnete Stütze 24. Die Stütze 24 stützt einen äußeren Rand 25 des Sicherungsrings 23 ab. Damit ist die Antriebswelle 14 axial abgestützt und in ihrer Lage gehalten. Der Deckel 21 weist zudem eine umlaufende Sicke 26 zur Verstärkung der Stütze 24 auf.

## Patentansprüche

1. Ventil (7) zur Steuerung von Abgas oder Frischluft in einer Antriebseinheit eines Kraftfahrzeuges oder Generators mit einem einen Kanal (12) aufweisenden Ventilgehäuse (11), mit einem auf einer Antriebswelle (14) befestigten Ventilkörper (15) zum Freigeben oder Verschließen eines Strömungsquerschnitts des Kanals (12), mit einem Antrieb (6) zur Verschwenkung der Antriebswelle (14), mit einer Lagerung (18) der Antriebswelle (14) in dem Ventilgehäuse (11) und mit einer axialen Abstützung (20) der Antriebswelle (14) in dem Ventilgehäuse (11), **dadurchgekennzeichnet**, dass die axiale Abstützung (20) von der Lagerung (18) aus gesehen am freien Ende der Antriebswelle (14) angeordnet ist.

2. Ventil nach Anspruch 1, **dadurchgekennzeichnet**, dass die Lagerung (18) zwischen der axialen Abstützung (20) und einem Absatz (19) des Ventilgehäuses (11) angeordnet ist.

3. Ventil nach Anspruch 1 oder 2, **dadurchgekennzeichnet**, dass die axiale Abstützung (20) einen Rand (25) der Antriebswelle (14) und eine mit dem Ventilgehäuse (11) verbundene Stütze (24) zur Abstützung des Randes (25) hat.

4. Ventil nach Anspruch 3, **dadurchgekennzeichnet**, dass die Stütze (24) einen das Ventilgehäuse (11) über dem Ende der Antriebswelle (14) abdichtenden Deckel (21) aufweist.

5. Ventil nach Anspruch 4, **dadurchgekennzeichnet**, dass der Deckel (21) aus Blech gefertigt ist und in das Ventilgehäuse (11) eingepresst ist.

6. Ventil nach Anspruch 5, **dadurchgekennzeichnet**, dass der aus Blech gefertigte Deckel (21) eine ringförmige Sicke (26) als Stütze (24) aufweist.

7. Ventil nach zumindest einem der Ansprüche 3 bis 6, **dadurchgekennzeichnet**, dass der Rand (25) der axialen Abstützung von der Antriebswelle (14) hervorsteht.

8. Ventil nach zumindest einem der Ansprüche 3 bis 7, **dadurchgekennzeichnet**, dass die Antriebswelle (14) eine Nut (22) und ein in der Nut (22) eingesetzten, den Rand (25) der axialen Stütze (24) bildenden Sicherungsring (23) hat.

9. Ventil nach zumindest einem der Ansprüche 1 bis 8, **dadurchgekennzeichnet**, dass die Antriebswelle (14) einen Durchbruch (16) hat und dass der Ventilkörper (15) scheibenförmig gestaltet ist und in dem Durchbruch (16) befestigt ist.
